# EUROPEAN PATENT APPLICATION

(11) **EP 1 971 179 A1**
(43) Date of publication of application: **17.09.2008**
(21) Application number: 06810174.0
(22) Date of filing: 15.09.2006
(51) Int. Cl.: H04R 1/10, H01Q 1/46, H04M 1/21

(54) **EARPHONE-EQUIPPED ANTENNA AND EARPHONE**

(30) Priority: 19.12.2005 JP 2005365378
(71) Applicant: Ad-Plan CO., LTD, Nishiaraya, Toyoma-shi Toyama 9398251 (JP)
(72) Inventor: NAKAGAWA, Noboru, Toyama-shi, Toyama 9398251 (JP)
(74) Representative: Viering, Jentschura & Partner
(86) International application number: PCT/JP2006/318332
(87) International publication number: WO 2007/072614

(57) **Abstract**

In order to improve receiver sensitivity of an earphone using a cable as an antenna, in the present invention, the earphone includes a cable, an antenna wire ANT incorporated in the cable, signal wires R and L incorporated in the cable with the antenna wire ANT, a plug 32 provided to the cable and electrically connecting the antenna wire ANT and the signal wires R and L to a portable telephone 1, a remote control 33 provided to the cable and disposed in spaced relationship with plug 32, a high-frequency attenuation element 5C incorporated in the remote control 33, and arranged in the signal wires R and L, and a high-frequency attenuation element 5B incorporated in the remote control 33 and arranged in the antenna wire ANT so as to be located adjacent to the high-frequency attenuation element 5C. The high-frequency attenuation elements 5B and 5C are located on a position in the remote control 33, which is closer to the plug 32.

## Description

### Technical Field

The present invention relates to an earphone-equipped antenna and the like as an electric-sound converter that converts electric signals to sound.

### Background Art

With the development of technology, portable information receiving devices, for example, portable telephones, have not only a conversation function but also communication functions, such as email and the Internet. Because of its convenience and handiness, portable telephones have been rapidly spreading worldwide.

With such a spread of portable telephones, portable telephones having various functions other than a conversation function and a communication function have been proposed (for example, refer to Patent Document 1). To be more specific, in Patent Document 1, a portable telephone having a music playback function is disclosed. Accordingly, there is a demand for high sound quality of a portable telephone and an earphone (headphone) to be connected to a portable telephone. Various techniques have been used to respond to such a demand. The provision of a music playback function to portable telephones as described above is replacing a conventional style in which a person carries a device exclusively for music playback to listen to desired music, with a style in which a person carries only a portable telephone and uses the portable telephone for music playback.

In Patent Document 1, a portable telephone having a function of receiving, for example, radio and television broadcasts, is also disclosed. In this case, if a dedicated antenna is incorporated in a portable telephone, downsizing and weight saving of the portable telephone are not achievable. Accordingly, a configuration is disclosed in which a tuner is incorporated in a portable telephone, and a cable (code) of a headphone to be connected to the portable telephone is caused to have an antenna function (for example, refer to Patent Document 2). To be more specific, Patent Document 2 discloses a configuration in which a headphone cable is connected to a tuner through a connector so as to cause the headphone cable to serve as an external antenna. In the configuration, when the connector of the headphone is connected to a portable telephone, output of audio signal is redirected from a speaker to the headphone.

Patent Document 1: Japanese Patent Application Laid Open Publication No. 2002-101164
Patent Document 2: Japanese Utility Model Application Laid Open Publication No. 3-2708

### Disclosure of the Invention

### Problems to be solved by the Invention

However, in the case where the cable of a headphone or an earphone is used as an external antenna, there is a problem in terms of receiver sensitivity in a conventional configuration. In other words, it is difficult to efficiently improve the receiver sensitivity. As a matter of course, various modifications have been made on a headphone and the like, however, resulting in an insufficient level of performance, excessive cost to be spent, and the like. Therefore, the problem has not been solved yet. In the meantime, as also on portable telephones to which a headphone and the like are connected, modifications have been made for improvement of receiver sensitivity. However, in view of a high performance portable telephone and the like, it is becoming more difficult to incorporate a unit that improves the receiver sensitivity in the portable telephone.

Under such a situation, a portable telephone antenna has also been proposed, which is connected to an interface connector of a portable telephone, and has a connector unit having an antenna connecting terminal to be electrically connected to an antenna terminal of the interface connector, and an external antenna unit having an antenna element to be electrically connected to the antenna connecting terminal. According to this proposal, with the antenna element having a wave-guiding element, a radiating element, and a reflective element, a larger transmittable and receivable range of a portable telephone is achievable. However, it is difficult to apply such a configuration to a headphone.

The present invention has been made to address the above-described technical problems. An object of the present invention is to improve receiver sensitivity of an earphone which uses a cable as an antenna.

### Means for Solving the Problems

In order to achieve the above-described object, an earphone-equipped antenna to which the present invention is applied is provided with: a cable; an antenna wire incorporated in the cable; a signal wire incorporated in the cable with the antenna wire; a plug provided to the cable and electrically connecting the antenna wire and the signal wire to an external apparatus; an operation unit provided to the cable and disposed in spaced relationship with the plug; a first high-frequency attenuation element incorporated in the operation unit, and arranged in the signal wire; and a second high-frequency attenuation element incorporated in the operation unit, and arranged in the antenna wire so as to be located adjacent to the first high-frequency attenuation element. The first high-frequency attenuation element and the second high-frequency attenuation element are located on a position in the operation unit, which is closer to the plug.

The cable includes plural cable portions having a connecting part, and the operation unit is arranged to be located, among the cable portions, in a cable portion where the plug is provided. The earphone-equipped antenna is further provided with a jack that is inserted to the operation unit.
The first high-frequency attenuation element and the second high-frequency attenuation element are chip beads. The first high-frequency attenuation element and the second high-frequency attenuation element are inductors.
The second high-frequency attenuation element defines an antenna length of the antenna wire.

From another standpoint, an earphone to which the present invention is applied is provided with: a cable including plural signal channels including an antenna wire; a plug having terminals corresponding respectively to the plural signal channels included in the cable, and connecting the plural signal channels to an external apparatus, respectively, through the terminals; an operation unit provided to the cable and disposed in spaced relationship with the plug; and high-frequency attenuation elements incorporated in the operation unit, located on a position in the operation unit, which is closer to the plug, and arranged in the plural signal channels including the antenna wire that are included in the cable.

### Advantages of the Invention

According to the present invention, it is possible to improve receiver sensitivity of an earphone which uses a cable as an antenna.

### Best Modes for carrying out the Invention

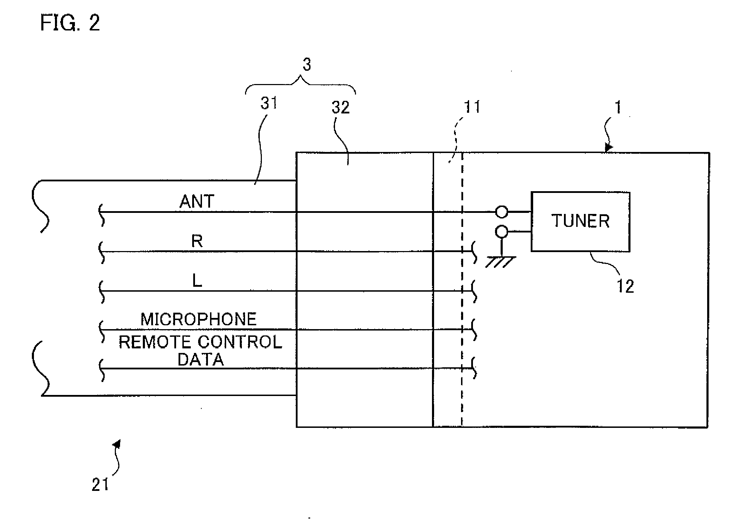

By referring to the attached drawings, exemplary embodiments of the present invention will be described in detail below.

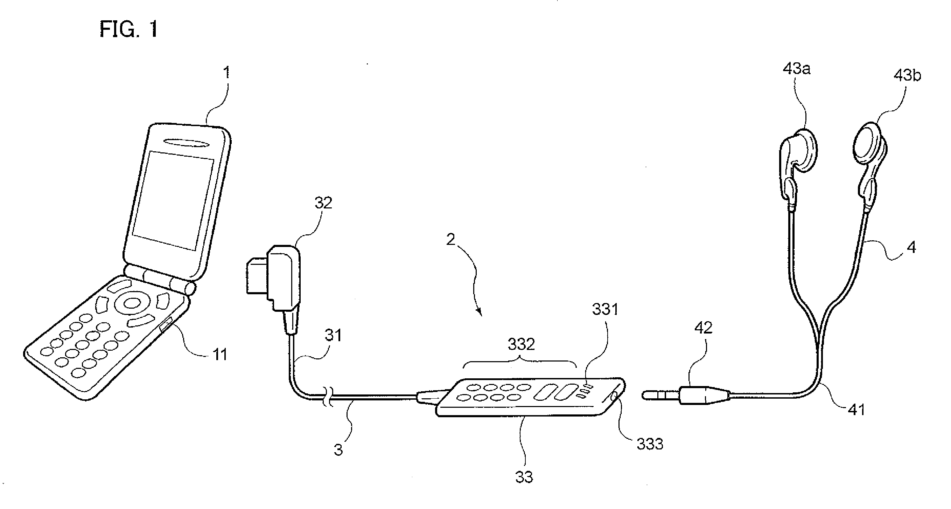

FIGURE 1 is a schematic configuration diagram of an earphone 2 according to the exemplary embodiment and a portable telephone 1 in which the earphone 2 is used.
The portable telephone (a receiver, an external apparatus, a portable electronic device) 1 illustrated in FIG. 1 has a jack 11 to which the earphone (headphone) 2 is connected. Further, the portable telephone 1 has a tuner 12 (refer to FIG. 2) serving as a receiving function for receiving FM radio broadcasts, VHF television broadcasts, UHF television broadcasts, and the like. When a user is to receive a desired broadcast, the earphone 2 functioning as an antenna is connected to the jack 11 of the portable telephone 1.

When the earphone 2 is connected to the jack 11, the earphone 2 functions as an external antenna for receiving a broadcast for the portable telephone 1. Moreover, when the earphone 2 is connected to the jack 11, sound output from a built-in speaker, which is not shown in the figure, of the portable telephone 1 is blocked, and a user is allowed to listen to a broadcast through the earphone 2.
In the present exemplary embodiment, a received broadcast is audio output only. However, the present invention is applicable as well to a portable telephone configured to be capable of not only audio output but also image output. Moreover, the portable telephone 1 may also be configured to be capable of receiving not only FM radio broadcasts but also AM radio broadcasts.

Furthermore, the portable telephone 1 has a music playback function for playing music recorded in advance in an internal memory or an external memory, which are not shown in the figure, in a predetermined data format, such as MP3 format. It should be noted that the external memory here refers to a memory medium, which is detachably attached to the portable telephone 1, for example, a SD memory card.

The earphone 2 has a functional unit 3 to be connected to the portable telephone 1, and an audio output unit 4 to be connected to the functional unit 3. The functional unit 3 outputs, in the form of electric signals, instructions which have been given by a user to the portable telephone 1, to the portable telephone 1. The audio output unit 4 outputs sounds corresponding to the electric signals from the portable telephone 1 via the functional unit 3.

In the present exemplary embodiment, the earphone 2 is configured to have the functional unit 3 and the audio output unit 4 which are separable by connectors. However, an earphone configured to have these units not separable in such a way may also be used. The earphone 2 referred here is configured to have the functional unit 3 and the audio output unit 4. However, for example, the functional unit 3 alone may be considered as the earphone 2. Moreover, the functional unit 3 connected to the portable telephone 1 may be considered as an antenna that receives radio broadcasts and television broadcasts.

The functional unit 3 has a cable (cable portion) 31 that incorporates multiple signal wires (core wires) therein, a plug 32 that is provided at one end of the cable 31, and to be connected to the jack 11 of the portable telephone 1, and a remote control (an operation portion, an intermediate portion) 33 that is provided at the other end of the cable 31, and is operated by a user giving instructions to the portable telephone 1. The multiple signal wires incorporated in the cable 31 are for transmitting electric signals. However, the present exemplary embodiment may be applied as well to the case where the multiple signal wires are configured to transmit other signals, such as light signals.

Here, arranged on the remote control 33 are a microphone (audio input portion) 331 from which user's voice is input, and various buttons 332 for a user to operate for audio volume adjustment, reception frequency adjustment, and music playback. Further, an output terminal 333 for connecting the audio output unit 4 is provided in the remote control 33 on the opposite side of the cable 31. It should be noted that the position of the output terminal 333 in the remote control 33 is not limited to the case of the present exemplary embodiment, and the position may be on a side other than the opposite side of the cable 31.

The audio output unit 4 has a cable 41 that incorporates multiple signal wires and branches into two on the way from one end to the other end thereof, a plug (connecting portion) 42 that is arranged at the one end of the cable 41 and is to be inserted to the output terminal 333 of the functional unit 3, and a right speaker 43a and a left speaker 43b that are arranged at the other end of the cable 41 and is to be respectively set on ears of a user. The right speaker 43a and the left speaker 43b output sounds obtained by converting electric signals sent via the plug 42 and the cable 41.

In the present exemplary embodiment, the case where the earphone 2 is connected to the portable telephone 1 has been described. However, the present invention may be applied as well to the case where a power cord, not shown in the figure, is connected to the portable telephone 1 instead of the earphone 2. The power cord is for supplying electricity to the portable telephone 1 from an electrically wired outlet. Accordingly, the power cord incorporates electric-supply channels, such as a power line, a power wire, and a conductor wire.
Further, the present invention may also be applied to the case, other than the case of the portable telephone 1, where the earphone 2 or a power cord, which is not shown in the figure, is connected to a portable radio receiver, which is not shown in the figure.

FIGURE 2 is a schematic configuration diagram for explaining a state in which the functional unit 3 of the earphone 21 according to the present exemplary embodiment is connected to the portable telephone 1.
As shown in FIG. 2, the cable 31 of the functional unit 3 has a signal wire (antenna wire) ANT that functions as an antenna, a signal wire R that transmits signals to the right speaker 43a of the audio output unit 4 (refer to FIG. 1), and a signal wire L that transmits signals to the left speaker 43b of the audio output unit 4. In addition to these, the cable 31 further has a signal wire for the microphone 331 arranged in the remote control 33 of the functional unit 3, and a signal wire for the buttons 332 arranged on the remote control 33. In the present exemplary embodiment, the cable 31 has five signal wires (a signal channel, a conducting channel, an electric-supply channel). However, the cable 31 may also be configured to additionally have other signal wires. A signal wire for ground is one of the signal wires that may be additionally provided.

When the plug 32 of the functional unit 3 is inserted to the jack 11 of the portable telephone 1, the functional unit 3 and the portable telephone 1 are electrically connected. Accordingly, the signal wire ANT is connected to the tuner 12 incorporated in the portable telephone 1. Other signal wires are connected to circuits, which are not shown in the figure, in the portable telephone 1.

### [First exemplary embodiment]

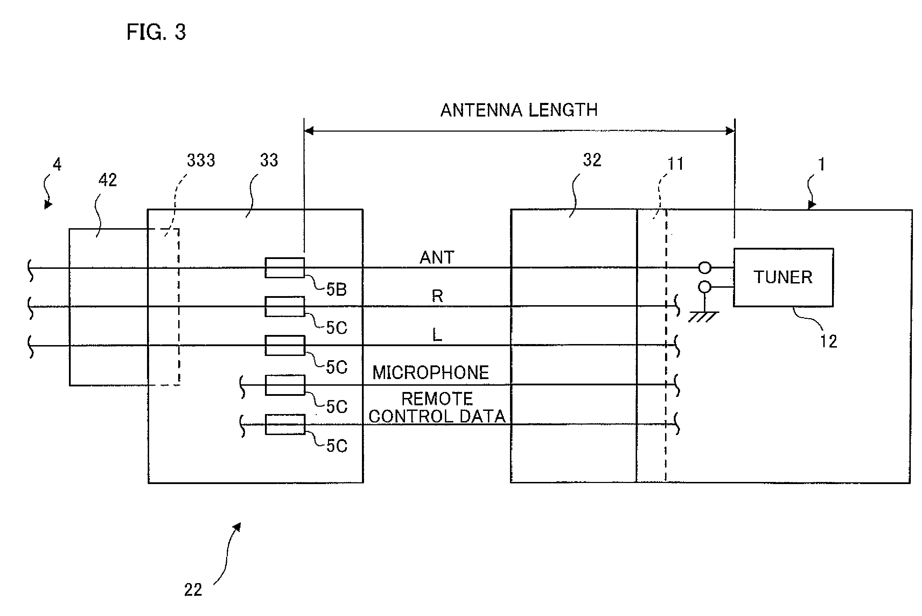

FIGURE 3 is a schematic configuration diagram for explaining a state in which an earphone 22 according to a first exemplary embodiment is connected to the portable telephone 1.
In the earphone 22 shown in FIG. 3, a chip bead (second high-frequency attenuation element) 5B and a chip beads (first high-frequency attenuation element) 5C are incorporated in the remote control 33 of the functional unit 3. To be more specific, in the remote control 33, the chip bead 5B is arranged on the signal wire ANT. Meanwhile, in the remote control 33, the chip beads 5C are arranged on the signal wires R and L, the signal wire for the microphone 331, and the signal wire for the buttons 332, respectively.

In this case, the chip beads 5B and 5C are electric parts which allow necessary signals to pass through while not allowing any more unnecessary signals (noise) in an intended high-frequency band to pass through. Further, the chip beads 5B and 5C have signal absorption characteristics over a wide frequency band. The chip beads 5B and 5C are elements for causing attenuation of a high frequency, and are referred to as high-frequency attenuation elements or high-frequency absorption elements. High-frequency attenuation elements include an inductor and a choke coil, and these may also be used as an alternative. As for the chip beads 5B and 5C, those having a predetermined impedance which is determined according to the condition in which they are used are employed.
As described above, in the remote control 33, it is configured that high frequency waves in all the signal wires, including the signal wire ANT, are to be attenuated by the chip beads 5B and 5C.

Further, as for the signal wire ANT, by the chip bead 5B incorporated in the remote control 33, the distance between the chip bead 5B and the tuner 12 in the portable telephone 1 is set as an antenna length. Accordingly, airwaves are received at a part corresponding to the antenna length of the signal wire ANT. As described here, the cable 41 (refer to FIG. 1) extending from the remote control 33 via the plug 42 is not used as an antenna. Therefore, by arranging the chip bead 5B so as to acquire an optimum antenna length for receiving a predetermined airwave, an optimal antenna effect is obtainable.

In the meantime, the other signal wires, such as the signal wires R and L, arranged with the signal wire ANT inside of the cable 31 are each provided with the chip bead 5C of the remote control 33. Accordingly, in the other signal wires than the signal wire ANT, high frequency waves are attenuated at the end located on a position closer to the remote control 33. Meanwhile, in the remote control 33, the chip bead 5B and the chip beads 5C are arranged next to each other. Therefore, input of a high frequency to the part of the signal wire ANT corresponding to the antenna length is avoidable. Thus, intended receiver sensitivity is achievable.

Here, a description will be given of setting of the antenna length. When a wavelength is represented by λ, the antenna length is principally set to λ/4. If the number of frequencies to be handled is large, the antenna length is set so as to adjust the center of each bandwidth to nλ/4 (n is an odd number). However, if not all the bandwidths are satisfied, it is necessary to give priority to a bandwidth having lower sensitivity than a bandwidth having higher sensitivity.

In the present exemplary embodiment, receiving bandwidths are set to: FM broadcasts in a frequency range from 76 to 90 MHz; VHF television broadcasts in a frequency range from 90 to 108 MHz (1CH to 3CH) and from 170 to 222 MHz (4CH to 12CH), and UHF television broadcasts in a frequency range from 470 to 770 MHz (13CH to 62CH). In the case of FM broadcasts, λ = 3.95 to 3.33 m. In the case of VHF, λ = 3.33 to 2.78 m and λ = 1.76 to 1.35 m. In the case of UHF, λ = 64 to 39 cm.

Then, the antenna length is set so as to adjust the center of each of the bandwidths to approximately nλ/4 . With the antenna length thus set, an experiment for measuring the reception status is carried out, and reception levels for frequencies of the respective bandwidths are acquired. By examining the degree of the sensitivity, the antenna length is sufficiently adjusted.

### [Second exemplary embodiment]

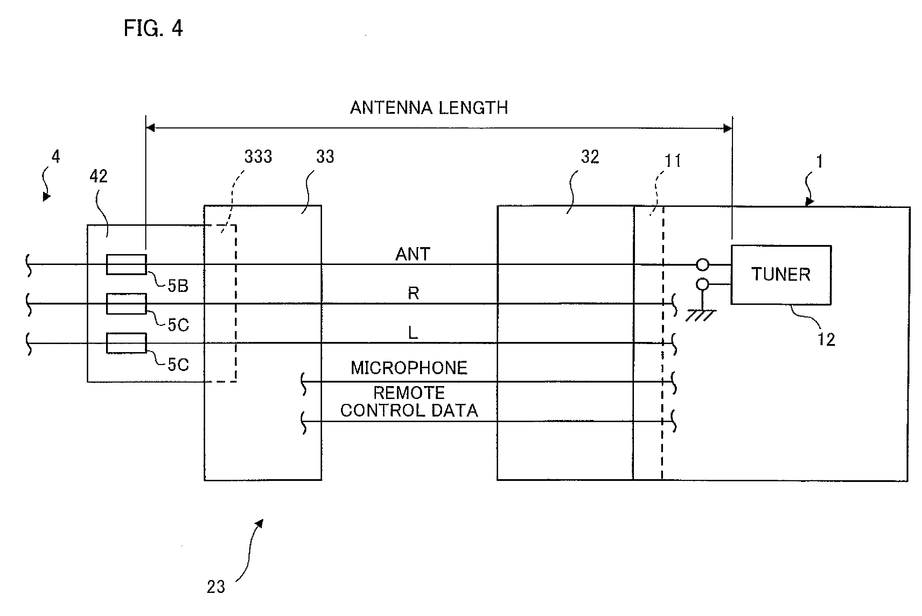

FIGURE 4 is a schematic configuration diagram for explaining a state in which an earphone 23 according to a second exemplary embodiment is connected to the portable telephone 1. It should be noted that descriptions of the same configurations in the earphone 23 according to the second exemplary embodiment as those in the earphone 22 according to the first exemplary embodiment will be omitted.
In the earphone 23 shown in FIG. 4, different from the earphone 22 shown in FIG. 3, the chip beads 5B and 5C are incorporated in the plug 42 of the audio output unit 4. To be more specific, in the plug 42, the chip bead 5B is provided to the signal wire ANT, and the chip bead 5C is provided to the individual signal wires R and L.

Further, among five signal wires, only signal wires ANT, R, and L extend from the plug 42 to the cable 41 (refer to FIG. 1). Accordingly, a smaller number of chip beads 5C is achievable in the case where the chip beads 5C are incorporated in the plug 42 of the audio output unit 4 compared to the case where the chip beads 5C are incorporated in the remote control 33 of the functional unit 3. Therefore, a lower production cost for the earphone 23 is achievable.

In the present exemplary embodiment, the chip beads 5B and 5C are incorporated in the plug 42 of the audio output unit 4. However, they may be provided in the vicinity of the output terminal 333 in the remote control 33 of the earphone 23. To be more specific, in the vicinity of the output terminal 333, the signal wires ANT, R, and L are unlikely to be affected by the signal wire for the microphone 331 and the signal wire for the buttons 332. For this reason, the chip beads 5B and 5C may be provided in the vicinity of the output terminal 333.

As having been described above, according to the present exemplary embodiment, loss occurring of a received electric wave when the received electric wave is input to the tuner 12 of the portable telephone 1 is suppressible. Accordingly, improved receiver sensitivity can be achieved. Furthermore, reception is performed with a predetermined antenna length; thus, change in receiver sensitivity can be avoided.

### Brief Description of the Drawings

FIGURE 1 is a schematic configuration diagram of an earphone according to the exemplary embodiment and a portable telephone in which the earphone is used;
FIGURE 2 is a schematic configuration diagram for explaining a state in which the functional unit of the earphone according to the present exemplary embodiment is connected to the portable telephone;
FIGURE 3 is a schematic configuration diagram for explaining a state in which an earphone according to a first exemplary embodiment is connected to the portable telephone; and
FIGURE 4 is a schematic configuration diagram for explaining a state in which an earphone according to a second exemplary embodiment is connected to the portable telephone.

### Description of Reference Numerals and Signs

1 ... portable telephone, 11 ... jack, 12 ... tuner, 2, 21, 22, 23 ... earphone, 3 ... functional unit, 31, 41 ... cable, 32, 42 ... plug, 33 ... remote control, 331 ... microphone, 332 ... button, 333 ... output terminal, 4 ... audio output unit, 43a ... right speaker, 43b ... left speaker, 5B, 5C ... chip bead

## Claims

1. An earphone-equipped antenna, comprising:
a cable;
an antenna wire incorporated in the cable;
a signal wire incorporated in the cable with the antenna wire;
a plug provided to the cable and electrically connecting the antenna wire and the signal wire to an external apparatus;
an operation unit provided to the cable and disposed in spaced relationship with the plug;
a first high-frequency attenuation element incorporated in the operation unit, and arranged in the signal wire; and
a second high-frequency attenuation element incorporated in the operation unit, and arranged in the antenna wire so as to be located adjacent to the first high-frequency attenuation element, wherein
the first high-frequency attenuation element and the second high-frequency attenuation element are located on a position in the operation unit, which is closer to the plug.

2. The earphone-equipped antenna according to claim 1, wherein
the cable includes a plurality of cable portions having a connecting part, and
the operation unit is arranged to be located, among the cable portions, in a cable portion where the plug is provided.

3. The earphone-equipped antenna according to claim 1, further comprising a jack that is inserted to the operation unit.

4. The earphone-equipped antenna according to claim 1, wherein the first high-frequency attenuation element and the second high-frequency attenuation element are chip beads.

5. The earphone-equipped antenna according to claim 1, wherein the first high-frequency attenuation element and the second high-frequency attenuation element are inductors.

6. The earphone-equipped antenna according to claim 1, wherein the second high-frequency attenuation element defines an antenna length of the antenna wire.

7. An earphone, comprising:
a cable including a plurality of signal channels including an antenna wire;
a plug having terminals corresponding respectively to the plurality of signal channels included in the cable, and connecting the plurality of signal channels to an external apparatus, respectively, through the terminals;
an operation unit provided to the cable and disposed in spaced relationship with the plug; and
high-frequency attenuation elements incorporated in the operation unit, located on a position in the operation unit, which is closer to the plug, and arranged in the plurality of signal channels including the antenna wire that are included in the cable.
